# EUROPÄISCHE PATENTSCHRIFT

(11) **EP 1 290 932 B1**
(45) Veröffentlichungstag und Bekanntmachung des Hinweises auf die Patenterteilung: **09.07.2008**
(21) Anmeldenummer: 02018611.0
(22) Anmeldetag: 20.08.2002
(51) Int. Cl.: A01C 7/08

(54) **Landwirtschaftliche Bearbeitungsmaschine**
Agricultural machine
Machine agricole

(30) Priorität: 23.08.2001 DE 10141231
(43) Veröffentlichungstag der Anmeldung: 12.03.2003
(73) Patentinhaber: Amazonen-Werke H. Dreyer GmbH & Co. KG, 49205 Hasbergen (DE)
(72) Erfinder: Tiessen, Reimer Uwe, 26135 Oldenburg (DE); Steen, Rüdiger, 26831 Bunde (DE); Reinke, Wilfried, 26123 Oldenburg (DE)

(56) Entgegenhaltungen:
- GB-A- 2 127 263
- US-A- 4 596 290
- US-A- 4 927 165
- US-A- 5 065 681
- US-A- 6 000 315

## Beschreibung

Die Erfindung betrifft eine landwirtschaftliche Bearbeitungsmaschine, beispielsweise eine Sämaschine mit großer Arbeitsbreite. Derartige Sämaschinen weisen einen Zentralrahmen auf, deren Zugdeichsel über Kupplungselemente an einen Ackerschlepper ankuppelbar ist. Bei Bearbeitungsmaschinen mit großen Arbeitsbreiten werden die Teilsektionen in Fahrtrichtung versetzt zueinander angeordnet. Ein solche Maschine ist aus US-A-4 596 290 bekannt.

Diese Anordnung hat jedoch insbesondere auf hügeligem Gelände den Nachteil, dass die an den Teilsektionen angeordneten Bearbeitungswerkzeuge, beispielsweise Zinken oder Säschar nicht ausreichend gleichmäßig in der Tiefe geführt werden können.

Der Erfindung liegt die Aufgabe zugrunde, bei Bearbeitungsmaschinen, deren einzelne Teilsektionen in Fahrtrichtung versetzt zueinander angeordnet sind, eine gute Bodenanpassung auch auf unebenem Gelände in Fahrtrichtung zu erreichen.

Diese Aufgabe wird erfindungsgemäß mittels der Merkmale des Anspruches 1 gelöst. Infolge dieser Maßnahmen sind die Hydraulikzylinder der einzelnen Teilsektionen derart miteinander verbunden, so dass sich ein hydraulisches Tandemfahrwerk ergibt. Die auf jeder Hälfte der Maschine angeordneten Bearbeitungswerkzeuge der hinteren Teilsektion können sich gegenüber der vorderen Teilsektion gegeneinander bewegen.

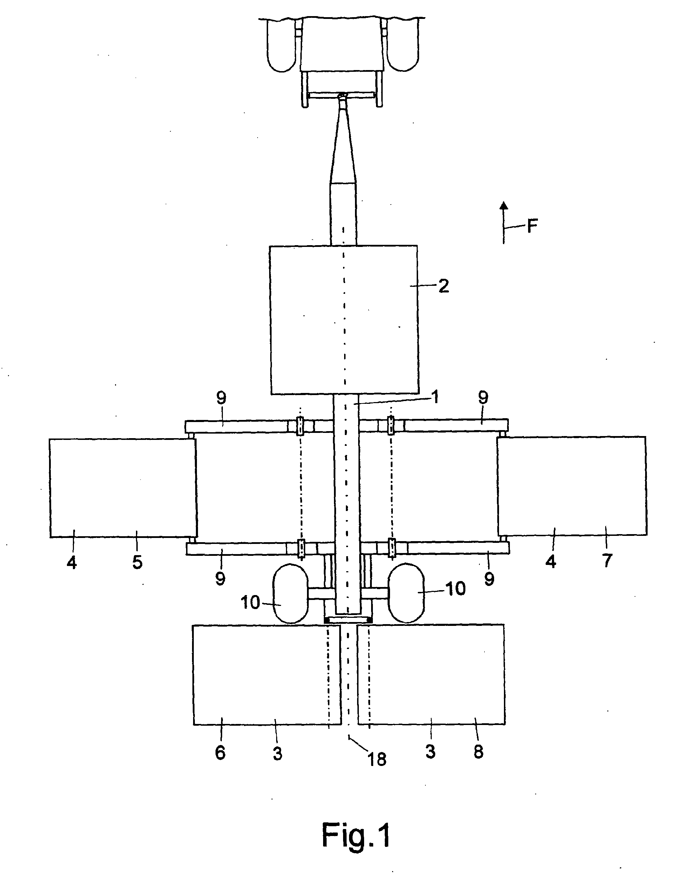

Weitere Einzelheiten der Erfindung sind den übrigen Ansprüchen, der Beispielsbeschreibung und den Zeichnungen zu entnehmen. Hierbei zeigen
- Fig. 1: eine als Sämaschine ausgebildete Bodenbearbeitungsmaschine in der Draufsicht und in Prinzipdarstellung,
- Fig. 2: die Bodenbearbeitungsmaschine gemäß Fig. 1 in Seitenansicht, Prinzipdarstellung und vergrößertem Maßstab und
- Fig. 3: den Hydraulikschaltplan für die den Tragrädern zugeordneten Hydraulikzylindern.

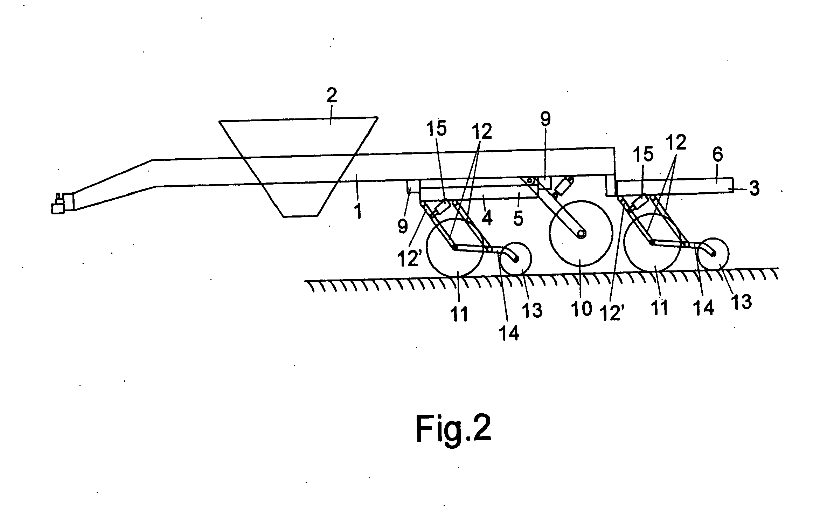

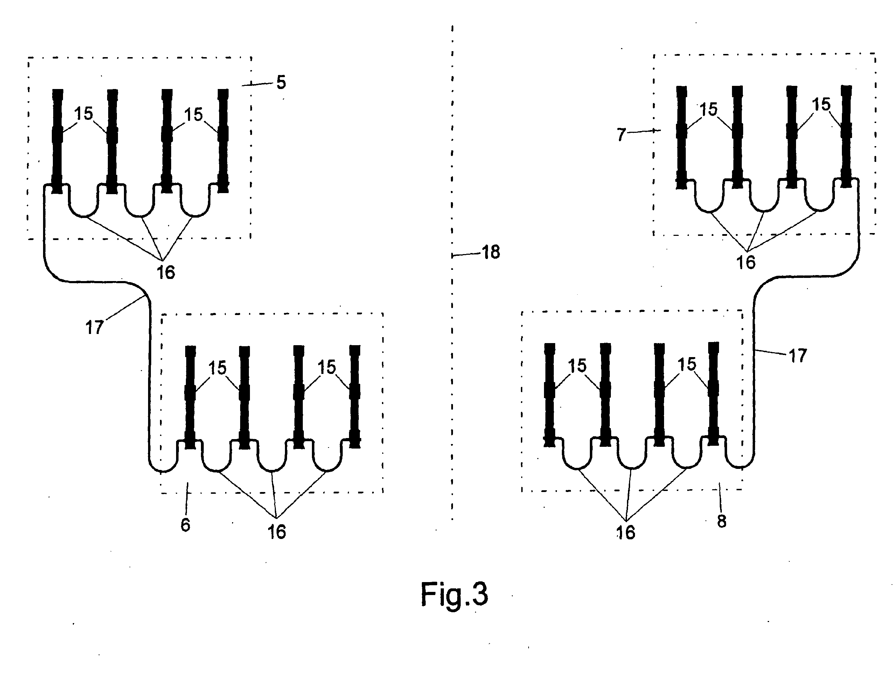

Die als Sämaschine ausgebildete Bodenbearbeitungsmaschine weist den zentralen Tragrahmen 1, den Vorratsbehälter 2 und die an dem Zentralrahmen 1 angeordneten beiden mittleren hinteren Teilrahmen 3 und die beiden vorderen Außenrahmen 4, die jeweils die Teilsektionen 5,6,7 und 8 bilden. Die mittleren Teilrahmen 3 sind in Fahrtrichtung F versetzt zu den vorderen Teilrahmen 4 angeordnet. Während der Arbeit sind die einzelnen Teilrahmen 3 und 4 gegenüber dem Zentralrahmen 1 starr mittels geeigneter Mittel verriegelt. Die Außenrahmen 4 sind über Tragarme 9 in Transportstellung einschwenkbar am Zentralrahmen 1 angeordnet. Während der Arbeit sind die Tragarme 9 mit den Außenrahmen 4 gegenüber den Zentralrahmen 1 verriegelt. Des weiteren sind an dem Rahmen 1 in Höhenrichtung bewegbar angeordnete Laufräder 10 zum Transport der Maschine angeordnet. Diese Laufräder 10 sind mittels geeigneter Mittel gegenüber den Zentralrahmen 1 absenkbar, um den Rahmen 1 mit den äußeren 4 und hinteren Rahmen 3 für den Transport anzuheben und anhebbar gegenüber dem Rahmen 1, um während der Arbeit vom Boden frei zu kommen, so dass die Maschine sich auf den Tragrädern 11, die an den Teilrahmen 3 und 4 angeordnet sind, abstützen kann. Die Tragräder 11 sind mittels Parallelogrammaufhängung 12 an den einzelnen Teilsektionen 5,6,7,8 der Rahmen 3,4 gegenüber diesen bewegbar angeordnet. Hinter den Tragrädern 11 sind Scheibenschare 13 zugeordnet. Die Scheibenschare 12 werden durch die Tragräder 11 aus über die Verbindungsmittel 14 in ihrer Eindringtiefe in den Boden geführt. An einem Teilrahmen 3 und 4 sind nebeneinander mehrere Tragräder 11 mit Scheibenscharen 13 angeordnet. Die diesen einem Teilrahmen 3,4 zugeordneten Tragrädern 11 und Säschare 12 können zusätzlich, in nicht dargestellter Weise versetzt zueinander in Fahrtrichtung angeordnet sein, um die Verstopfungstunanfälligkeit zu verbessern. Zwischen dem der die Tragräder 11 tragenden Lenker 12' und den jeweiligen Teilrahmen 3,4 ist jeweils ein Hydraulikzylinder 15 angeordnet. Die Hydraulikzylinder 15 der einer Teilsektion 5,6,7,8 zugeordneten Tragräder 11 sind, wie die Fig. 2 zeigt, über Hydraulikleitungen 16 miteinander verbunden, so dass zunächst die Tragräder 11, die einer Teilsektion 5,6,7,8 zugeordnet sind, sich durch einen Flüssigkeitsausgleich der den Hydraulikzylinder 15 untereinander in aufrechter Ebene bewegen können. Des weiteren sind die Hydraulikzylinder 14 aller Sektionen 5,6,7,8 der einen Seite der Maschine über die Hydraulikleitung 17 miteinander verbunden, wie die Fig. 3 zeigt, so dass jeweils die Hydraulikzylinder 15 einer vorderen 5,7 oder hinteren Sektion 6,8 einer Hälfte, also seitlich der Maschinenmitte 18 miteinander verbunden sind, wie ebenfalls die Fig. 3 zeigt. Aufgrund dieser Verbindung können sich auch die Tragräder 11 des vorderen Teilrahmens 5,7 zu dem jeweils zugeordneten hinteren Teilrahmen 6,8 der jeweiligen Maschinenhälfte zueinander bewegen, so dass sich quasi ein Tandemfahrwerk für die Maschine ergibt. Dies heißt, wenn die Tragräder 11 des vorderen Rahmens 5,7 in eine Senke gelangen, können Sie nach unten sich bewegen, während gleichzeitig die Tragräder 11 der hinteren Sektion 6,8 nach oben bewegt werden. Hierdurch ergibt sich also quasi ein hydraulisches Tandemfahrwerk für die Maschine.

## Patentansprüche

1. Landwirtschaftliche Bearbeitungsmaschine, wie beispielsweise Sämaschine großer Arbeitsbreite, die einen Zentralrahmen (1) aufweist, dessen Zugdeichsel über Kupplungselemente an einem Ackerschlepper ankuppelbar ist, wobei dem Zentralrahmen (1) Teilsektionen (5,6,7,8) zugeordnet sind, die aus zwei mittleren Teilrahmen (3) und jeweils seitlich der mittleren Teilrahmen (3) angeordneten Außenrahmen (3) bestehen, wobei die Außenrahmen in Fahrtrichtung (F) gegenüber dem mittleren Teilrahmen (3) versetzt am Rahmen (1) angeordnet sind, wobei sowohl an den mittleren Teilrahmen (3) wie auch den Außenrahmen (4) gegenüber diesen mittels Lenker (12,12') höhenbeweglich angeordnete Tragräder (11) und/oder Bodenbearbeitungswerkzeugen oder Säschare (13) angeordnet sind, wobei zwischen jedem ein Tragrad (11) tragenden Lenker (12') und dem zugeordneten Teilrahmen (3,4) bzw. Außenrahmen (4) ein Hydraulikzylinder (15) angeordnet ist, wobei die einer Teilsektion (5,6,7,8) zugeordneten Hydraulikzylinder (15) über Hydraulikleitungen (16) miteinander verbunden sind, wobei jeweils die Hydraulikzylinder (15) aller Sektionen (5,6,7,8) der einen Seite der Maschine über Hydraulikleitungen (17)miteinander verbunden sind, so dass jeweils die Hydraulikzylinder (15) einer vorderen (5,7) und hinteren Sektion (6,8) einer Hälfte miteinander verbunden sind.

2. Landwirtschaftliche Bearbeitungsmaschine nach Anspruch 1, **dadurch gekennzeichnet, dass** den Tragrädern (11) nachfolgend Scheibensäschare (13) zugeordnet sind.

3. Landwirtschaftliche Bearbeitungsmaschine nach einem oder mehreren der vorstehenden Ansprüche, **dadurch gekennzeichnet, dass** die nachfolgenden Scheibensäschare (13) durch die Tragräder (11) über Verbindungsmittel (14) in ihrer Eindringtiefe in den Boden geführt werden.

## Claims

1. Agricultural cultivating machine, such as, for example, a seed drill for large working widths that includes a central frame (1), the towing shaft of the said agricultural cultivating machine being attachable to a tractor by means of coupling members, wherein part sections (5, 6, 7, 8) are associated with the central frame (1), the said part sections comprising two central part frames (3) and outer frames (4) that are disposed on each side of the central part frame (3), wherein the outer frames, when viewed in the direction travel (F), are disposed offset on the frame (1) opposite the central part frame (3), wherein support wheels (11) and/or ground cultivating tools or sowing coulters (13) are disposed so as to be vertically displaceable both on the central part frames (3) and also on the outer frames (4) opposite the said central part frames by means of guide rods (12, 12'), wherein a hydraulic cylinder (13) is disposed between each guide rod (12') that supports a support wheel (11) and the associated part frame (3, 4) or respectively outer frame (4), wherein the hydraulic cylinders (15) associated with one part section (5, 6, 7, 8) are interconnected by means of hydraulic lines (16), wherein in each case the hydraulic cylinders (15) of all the sections (5, 6, 7, 8) of one side of the machine are interconnected by means of hydraulic lines (17) such that each of the hydraulic cylinders (15) of a front (5, 7) and rear section (6, 8) of one half are interconnected.

2. Agricultural cultivating machine according to claim 1, **characterised in that** sowing coulters (13) are provided following the support wheels (11).

3. Agricultural cultivating machine according to one or more of the preceding claims, **characterised in that** the depth of penetration of the following sowing coulters (13) into the ground is guided by the support wheels (11) by means of connecting means (14).

## Revendications

1. Machine agricole telle que semoir de grande largeur ayant un châssis central (1) dont le timon de traction est relié par des éléments d'attelage à un tracteur agricole, avec, associées au châssis central (1),
des sections partielles (5, 6, 7, 8) formées chaque fois de deux châssis partiels intermédiaires (3) et de chaque fois des châssis extérieurs (4) installés latéralement aux châssis intermédiaires (3),
les châssis extérieurs (4) étant installés de manière décalée sur le châssis (1) par rapport aux châssis intermédiaires (3),
à la fois les châssis intermédiaires (3) et aussi les châssis extérieurs (4) étant munis de roues de sustentation (11) et/ou d'outils pour le travail du sol ou de socs de semoir (13), mobiles en hauteur par rapport aux châssis extérieurs par l'intermédiaire de bras (12, 12'),
dans laquelle
un vérin hydraulique (15) est prévu respectivement entre chaque bras (12') portant une roue de sustentation (11) et le châssis partiel (3, 4) associé ou le châssis extérieur (4),
les vérins hydrauliques (15) associés à une section partielle (5, 6, 7, 8) étant reliés entre eux par des conduites hydrauliques (16), et
les vérins hydrauliques (15) de toutes les sections (5, 6, 7, 8) d'un côté de la machine sont reliés entre eux par des conduites hydrauliques (17) pour que les vérins hydrauliques (15) d'une section avant (5, 7) et d'une section arrière (6, 8) d'une moitié soient reliés entre eux.

2. Machine agricole selon la revendication 1,
**caractérisée en ce que**
les roues de sustentation (11) sont suivies de socs de semoir en forme de disques (13).

3. Machine selon l'une ou plusieurs des revendications précédentes,
**caractérisée en ce que**
les socs de semoir en forme de disques (13) suiveurs sont guidés par les roues de sustentation (11) par l'intermédiaire de moyens de liaison (14) pour leur profondeur de pénétration dans le sol.
